# EUROPÄISCHE PATENTSCHRIFT

(11) **EP 3 649 383 B1**
(45) Veröffentlichungstag und Bekanntmachung des Hinweises auf die Patenterteilung: **15.11.2023**
(21) Anmeldenummer: 18745810.4
(22) Anmeldetag: 24.05.2018
(51) Int. Cl.: F16J 9/06, F16J 9/14

(54) **ÖLABSTREIFKOLBENRING**
OIL SCRAPER PISTON RING
SEGMENT DE PISTON RACLEUR D'HUILE

(30) Priorität: 05.07.2017 DE 102017114978
(43) Veröffentlichungstag der Anmeldung: 13.05.2020
(73) Patentinhaber: Federal-Mogul Burscheid GmbH, 51399 Burscheid (DE)
(72) Erfinder: BÄRENREUTER, Dirk, 51519 Odenthal (DE)
(74) Vertreter: Döpp, Ludger
(86) Internationale Anmeldenummer: PCT/DE2018/100503
(87) Internationale Veröffentlichungsnummer: WO 2019/007455

(56) Entgegenhaltungen:
- GB-A- 512 515
- GB-A- 555 348
- US-A- 2 357 467
- US-A- 2 469 959

## Beschreibung

Die Erfindung betrifft einen mehrteiligen Ölabstreifkolbenring gemäß gattungsbildendem Teil des ersten Patentanspruchs.

Als Ölabstreifringe werden vielfach Kolbenringe eingesetzt, die aus zwei Lamellenelementen bestehen, die mittels eines radial dahinter angeordneten Federelements an die zugehörige Zylinderwand angedrückt werden.

Beispielhaft sei auf die DE 20 2009 013 834 U1 verwiesen.

Dieser, auch als dreiteiliger Kolbenring bekannte, Ölabstreifring hat unter anderem die Aufgabe, die Gase des Verbrennungsraums von dem Kurbelgehäuse der Brennkraftmaschine fernzuhalten (BlowBy), um das Öl aus dem Kurbelgehäuse am Eindringen in den Verbrennungsraum abzuhalten.

Beiden Aufgaben kommt verstärkte Bedeutung zu, da
a) das BlowBy aus dem Kurbelgehäuse Ölpartikel mitreißt und über die Rückführung in den Ansaugtrakt diese Ölpartikel in den Verbrennungsraum gelangen. Die Ölpartikel tragen nach Verbrennung zur Partikelemission bei.
b) Durch z.B. Zylinderabschaltung kommt es bei modernen Motoren vermehrt zu Unterdrucksituationen im Verbrennungsraum, welche Öl aus dem Kurbelgehäuse am Kolben vorbei in Richtung Verbrennungsraum ansaugen. Diese Ölansammlung führt ebenfalls zu verstärkter Partikelbildung im Verbrennungsgas.

Durch die GB 512515 A ist ein mehrteiliger Ölabstreifkolbenring bekannt geworden, beinhaltend ein geschlitztes Federelement und mindestens ein damit in Wirkverbindung stehendes, mit einem Stoßbereich versehenes Lamellenelement. Die DE 10 2015 008 472 B3 offenbart einen Ölabstreifkolbenring mit einem mindestens einteiligen ringförmigen Federsystem, das - in Umfangsrichtung gesehen - ein etwa wellenförmig verlaufendes Profil vorgebbarer Wandstärke aufweist sowie mindestens zwei damit in Wirkverbindung stehende, axial beabstandete Lamellenringe, wobei zumindest Teilbereiche der radial außen gelegenen Umfangsabschnitte des Federsystems Abstreifbereiche für Öl bilden, während die radial äußeren Umfangsbereiche der Lamellenringe nicht zum Abstreifen von Öl vorgesehen, vielmehr radial gegenüber den Öl abstreifenden Umfangsabschnitten des Federsystems zurückgesetzt sind.

In der DE 10 2011 106 656 A1 wird ein Ölabstreifkolbenring für einen Kolben eines Verbrennungsmotors beschrieben, bestehend aus mindestens einer Lamelle und jeweils einem Stoß und aus einer mäanderförmigen Distanzfeder mit einem Stoß, wobei die mindestens eine Lamelle und die Distanzfeder miteinander in Kontakt stehen, wobei der Stoß der mindestens einen Lamelle mit dem Radius der mindestens einen Lamelle einen spitzen Winkel einschließt.

Da sowohl das Federelement als auch die Lamellenelemente mit Stößen versehen sind, ist nicht zu verhindern, dass BlowBy Gase sowie Öl aus dem Kurbelgehäuse über die offenen Stöße der Lamellenelemente den mehrteiligen Ölabstreifkolbenring passieren.

Die US 2,469,959 A offenbart einen Ölabstreifkolbenring, der die technischen Merkmale des gattungsbildenden Teils des unabhängigen Anspruchs 1 beinhaltet.

Der GB 555348 ist ein Ölabstreifring zu entnehmen, gebildet durch zwei Lamellenelemente sowie ein dazwischen angeordnetes mäanderfederartig ausgebildetes Federelement. Der Stoßbereich des Federelements ist in überlappender Form vorgesehen.

Der Erfindung liegt die Aufgabe zugrunde, einen mehrteiligen Ölabstreifkolbenring dahingehend weiterzubilden, dass sowohl kein BlowBy aus dem Kurbelgehäuse Ölpartikel mitreißen kann als auch kein Öl aus dem Kurbelgehäuse zum Verbrennungsraum gelangen kann.

Diese Aufgabe wird durch die Merkmale des Anspruchs 1 gelöst, wobei einzelne Windungen des Federelements den Schenkel axial abstützen.

Eine vorteilhafte Weiterbildung der erfindungsgemäßen Ausgestaltungsform ist dem zugehörigen Unteranspruch zu entnehmen.

Beim Erfindungsgegenstand kann es zur Reduzierung von Bauhöhen ausreichen, wenn das Federelement mit einem einzelnen Lamellenelement in Wirkverbindung steht, da durch den Überlappungsbereich des Lamellenelements weder Blow-by noch Öl in Richtung der entsprechenden Räume durchtreten kann. Eine bevorzugte Ausführungsform sieht vor, dass das Federelement mit mindestens zwei Lamellenelementen in Wirkverbindung steht, wobei die Überlappungsbereiche - bei zwei Lamellenelementen - in spiegelbildlicher Form vorgesehen sein können.

Zur Erzeugung des jeweiligen Lamellen-Überlappungsbereichs wird vorgeschlagen, eines der Stoßendes eines der Lamellenelemente mit einer, in axialer Richtung gesehen, Stufe auszubilden.

Die Höhe der Stufe kann hierbei der axialen Dicke des jeweiligen Lamellenelements entsprechen, so dass der freie Schenkel des gestuften Stoßendbereichs den nicht gestuften Stoßendbereich über eine vorgebbare Länge untergreift.

Das Federelement ist, in an sich bekannter Weise, als Mäanderfeder ausgebildet, deren Windungsabschnitte im Bereich der Überlappung des Lamellenelements, in axialer Richtung gesehen, mit reduzierter Bauhöhe ausgebildet sind.

Hier bieten sich verschiedene Bauformen an:
- die Bauhöhe des Windungsabschnitts des Federelements kann dergestalt vorgesehen werden, dass der untergreifende Schenkel des Lamellenelements auf diesem Windungsabschnitt zumindest partiell abgestützt ist.
- alternativ besteht die nicht beanspruchte Möglichkeit, dass zumindest einer der Federendbereiche im Bereich der Überlappung des Lamellenelements geradlinig, d.h. ohne Windungen, ausgebildet ist.

Der Fachmann wird die jeweilige Ausführungsform des Federelements den im jeweiligen Verbrennungsmotor gegebenen technischen Anforderungen anpassen.

Der Erfindungsgegenstand ist anhand eines Ausführungsbeispiels in der Zeichnung dargestellt und wird wie folgt beschrieben. Es zeigen:
- Figur 1: Dreiteiliger Ölabstreifring gemäß Stand der Technik;
- Figur 2: Erfindungsgemäßer Ölabstreifkolbenring.

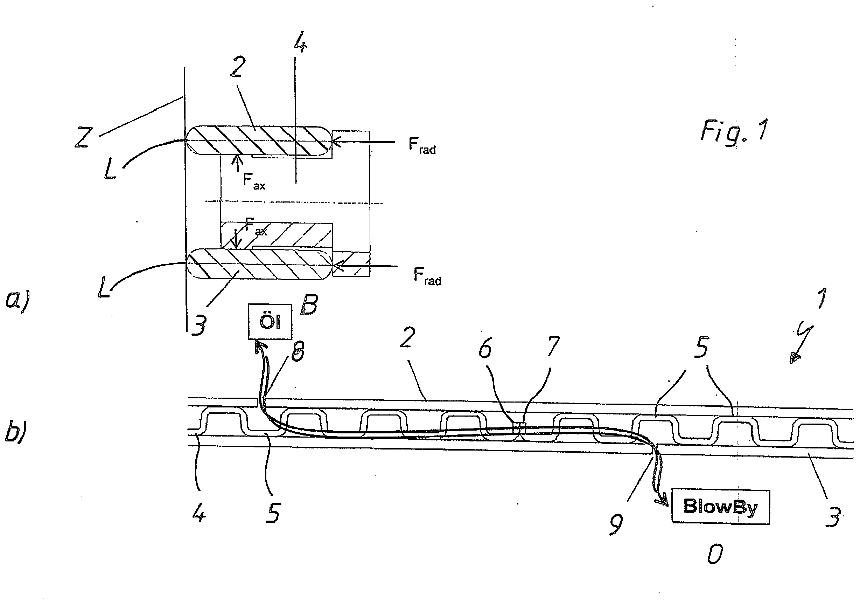

Figur 1 (a + b) zeigt einen, dem Stand der Technik entsprechenden Ölabstreifkolbenring 1, an dem die in der Beschreibung aufgezeigte Problematik dargestellt ist.

In diesem Beispiel wird ein dreiteiliger Ölabstreifkolbenring 1 vorgeschlagen, beinhaltend zwei Lamellenelemente 2,3 sowie ein Federelement 4, das in diesem Beispiel als Mäanderfeder ausgebildet ist, beinhaltend - in Umfangsrichtung gesehen - eine Vielzahl von Windungen 5. Das Federelement 4 ist in geschlitzter Form ausgebildet, dergestalt, dass die Stoßenden 6,7 aneinander liegen. Die Lamellenelemente 2,3 sind jeweils mit einem Stoß 8,9 versehen. Die Problematik der Durchtritte von Öl und Gas durch die Stöße 8 und 9 ist durch Pfeile gekennzeichnet. Es ist erkennbar, dass Öl in Richtung des Brennraums B und BlowBy Gas in Richtung des Ölraums O hindurchtreten kann. Die an den Lamellenelementen 2,3 durch das Federelement 4 wirkenden radialen und axialen Federkraftanteile (F_{rad}, Fₐₓ) sind durch Pfeile angedeutet.

Lediglich angedeutet ist eine Zylinderwand Z, an welcher die Laufflächen L der Lamellenelemente 2,3 unter Federkrafteinwirkung zur Anlage kommen.

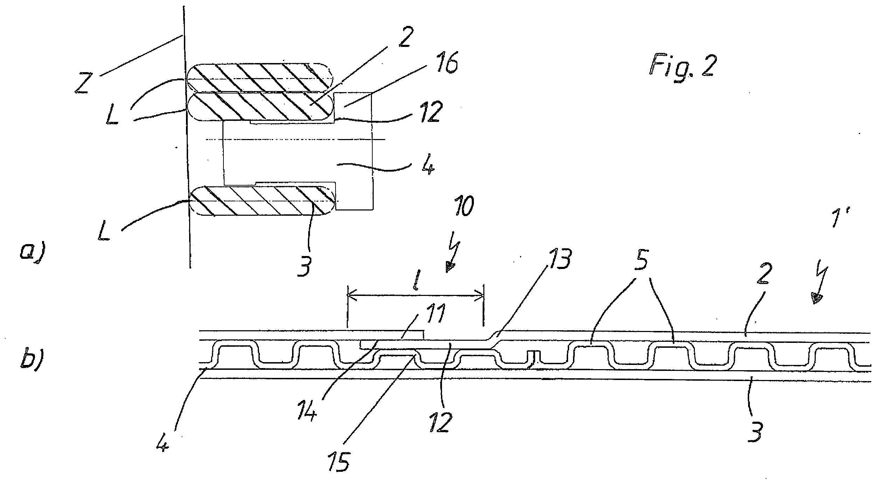

Figur 2 (a + b) zeigt den Erfindungsgegenstand. Der Ölabstreifkolbenring 1' beinhaltet die gleichen Bauteile wie im Stand der Technik gemäß Figur 1 dargestellt, nämlich zwei Lamellenelemente 2,3 sowie ein mäanderartig ausgebildetes Federelement 4.

Abweichend zu Figur 1 ist kein Stoß 8 im Bereich des oberen Lamellenelements 2 gegeben, vielmehr wird ein Überlappungsbereich 10 (Stoßbereich), vorgebbarer Länge I, im Bereich des Lamellenelements 2 gebildet. Das Lamellenelement 3 kann in analoger Weise, wie es in Figur 1 dargestellt ist, mit einem Stoß (nicht dargestellt) versehen werden. Während des eine Stoßende 11 des Lamellenelementes 2 in planer Ebene vorgesehen ist, wird bei dem anderen Stoßende 12 eine Stufe 13 vorgesehen, die von ihrer axialen Höhe so ausgebildet ist, dass der Endbereich 14 des Schenkels 12 den planen Schenkel 11 untergreift.

In analoger Weise wird das Federelement 4 hinsichtlich der Bauhöhe der Windungen 5 im Überlappungsbereich 10 axial reduziert, dergestalt, dass einzelne Windungen 15 des Federelements 4 den Schenkel 12 axial abstützen. In gleicher Weise werden die Stützfüßchen 16 (a) des Federelements 4 im Überlappungsbereich 10 ebenfalls reduziert, wobei die Stützfüßchen 16 dann radial hinter dem Schenkel 12 des Lamellenrings 2 zur Anlage kommen.

## Patentansprüche

1. Mehrteiliger Ölabstreifkolbenring beinhaltend ein geschlitztes Federelement (4) und mindestens ein damit in Wirkverbindung stehendes, mit einem Stoßbereich versehendes Lamellenelement (2,3), wobei die Stoßenden (11,12) des Lamellenelements (2,3) im Bereich ihrer einander zugewandten Stoßendbereiche in einander überlappender Form (10) vorgesehen sind, dergestalt, dass eines der Stoßenden (12) des Lamellenrings (2) mit einer, in axialer Richtung gesehen, Stufe (13) ausgebildet ist, wobei die Höhe der Stufe (13) der axialen Dicke des Lamellenelements (2) entspricht, so dass der freie Schenkel (12) des gestuften Stoßendbereichs den nicht gestuften Endbereich über eine vorgebbare Länge (I) untergreift, wobei das Federelement (4) eine Mäanderfeder ist, deren Windungsabschnitte im Bereich der Überlappung (10) des Lamellenelements (2), in axialer Richtung gesehen, mit reduzierter Bauhöhe ausgebildet sind, **dadurch gekennzeichnet, dass** einzelne Windungen (15) des Federelements (4) den Schenkel (12) axial abstützen.

2. Ölabstreifkolbenring nach Anspruch 1, **dadurch gekennzeichnet, dass** der Ölabstreifkolbenring (1') mindestens ein weiteres, mit einem Stoßbereich versehenes Lamellenelement (3) beinhaltet, wobei das weitere Lamellenelement (3) in analoger Weise zum ersten Lamellenelement (2) ausgebildet ist.

## Claims

1. A multi-piece oil control ring, including a slotted spring element (4) and at least one lamella element (2, 3) being operatively connected to said slotted spring element and provided with a joint region, wherein the joint ends (11, 12) of the lamella element (2, 3) are provided in the region of their joint ends facing one another in the form of an overlap (10) with one another in such a way that one of the butt ends (12) of the lamella ring (2) is formed with a step (13), viewed in the axial direction, wherein the height of the step (13) corresponds to the axial thickness of the lamella element (2), so that the free leg (12) of the stepped joint end region engages underneath the non-stepped end region over a specifiable length (1), wherein the spring element (4) is a meander spring, the winding sections of which are formed with reduced overall height in the region of the overlap (10) of the lamella element (2), viewed in the axial direction, **characterized in that** the individual windings (15) of the spring element (4) axially support the leg (12).

2. The oil control ring according to claim 1, **characterized in that** the oil control ring (1') includes at least one further lamella element (3) provided with a joint region, wherein the further lamella element (3) is formed analogously to the first lamella element (2).

## Revendications

1. Segment de piston racleur d'huile en plusieurs parties contenant un élément de ressort fendu (4) et au moins un élément lamellaire (2, 3) qui y est relié fonctionnellement et qui présente un dispositif de butée, dans lequel les extrémités de butée (11, 12) de l'élément lamellaire (2,3) sont disposées dans la zone de leurs régions d'extrémité adjacentes mutuellement opposées sous une forme superposée (10), de telle sorte qu'une des extrémités de butée (12) de l'élément lamellaire (2) soit configurée avec un gradin (13), vu dans la direction axiale, dans lequel la hauteur de la marche (13) correspond à l'épaisseur axiale de l'élément lamellaire (2), de sorte que la patte libre (12) de la zone d'extrémité étagée s'engage sous la zone d'extrémité non étagée sur une longueur prédéterminée (1), dans lequel l'élément de ressort (4) est un ressort à méandres dont les sections d'enroulement sont conçues avec une hauteur réduite dans la zone de superposition (10) de l'élément lamellaire (2), vu dans la direction axiale, **caractérisé en ce que** les enroulements (15) de l'élément de ressort (4) soutiennent axialement la patte (12).

2. Segment de piston racleur d'huile selon la revendication 1, **caractérisé en ce que** le segment de piston racleur d'huile (1') contient au moins un élément lamellaire supplémentaire pourvu d'une zone de butée (3), dans lequel l'élément lamellaire supplémentaire (3) est configuré de manière analogue au premier élément lamellaire (2).
